# EUROPÄISCHE PATENTSCHRIFT

(11) **EP 0 516 843 B1**
(45) Veröffentlichungstag und Bekanntmachung des Hinweises auf die Patenterteilung: **19.04.1995**
(21) Anmeldenummer: 92906005.1
(22) Anmeldetag: 19.12.1991
(51) Int. Cl.: G02F 1/39, H01S 3/10

(54) **OPTISCHER VERSTÄRKER**
OPTICAL AMPLIFIER
AMPLIFICATEUR OPTIQUE

(30) Priorität: 24.12.1990 DE 4041760
(43) Veröffentlichungstag der Anmeldung: 09.12.1992
(73) Patentinhaber: Alcatel SEL Aktiengesellschaft, D-70435 Stuttgart (DE)
(72) Erfinder: HEIDEMANN, Rolf, D-7146 Tamm (DE); PFEIFFER, Thomas, D-7000 Stuttgart 80 (DE); KAISER, Manfred, D-7254 Hemmingen (DE)
(74) Vertreter: Kugler, Hermann, Dipl.-Phys.
(86) Internationale Anmeldenummer: EP9102458
(87) Internationale Veröffentlichungsnummer: WO9211561

(56) Entgegenhaltungen:
- EP-A- 0 139 436
- EP-A- 0 275 768
- EP-A- 0 442 553

## Beschreibung

Optische Verstärker dienen zur Verstärkung von Lichtsignalen, die in einer Übertragungsstrecke, insbesondere in einer Lichtleitfaser, übertragen werden und durch Dämpfung abgeschwächt werden, so daß sie verstärkt werden müssen.

Ein optischer Verstärker mit Merkmalen nach dem Oberbegriff des Patentanspruchs 1 ist z.B. bekannt aus: M Yoshida et al: "Development of compact Er³⁺-doped Fiber Amplifiers for practical Applications", Technical Digest on Optical Amplifiers and their Applications 1990 (optical Sciety of America, Washington D.C., 1990), Vol. 13, Seiten 282 bis 285. Es ist ein Faserverstärker mit einem Erbium-dotierten Faserstück. Das Erbium ist eine laseraktive Substanz, zu deren Anregung ein als Pumplaser dienender Halbleiterlaser vorhanden ist. Der Halbleiterlaser emittiert hier beispielsweise Licht der Wellenlänge λ = 1480 nm. Dieses Licht wird über einen optischen Koppler in das dotierte Faserstück eingespeist. Angesteuert wird der Halbleiterlaser von einem Gleichstrom als Betriebsstrom.

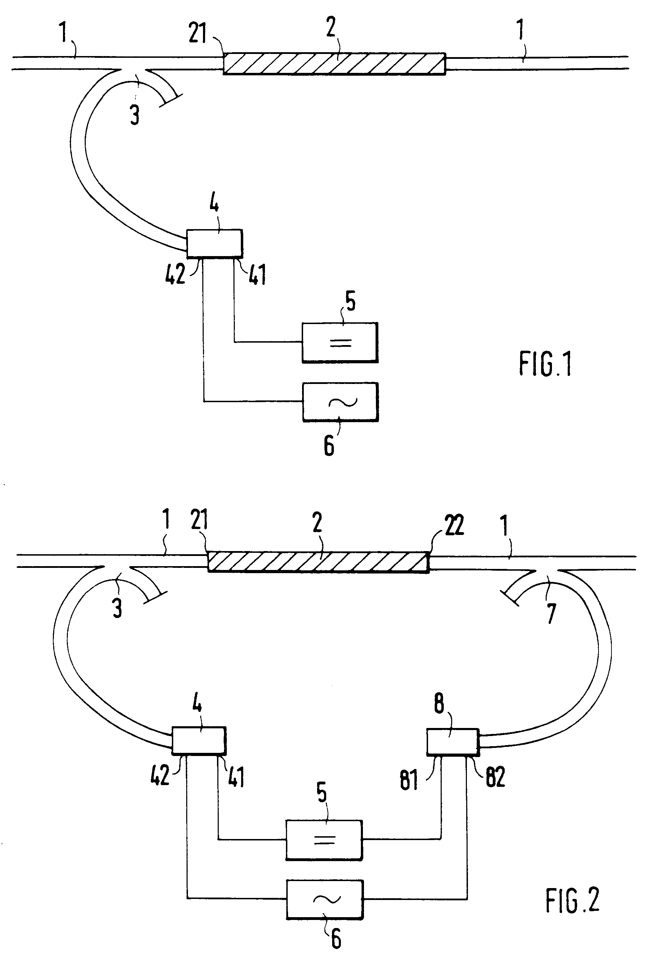

Statt eines einzigen Pumplasers wie bei Fig. la können auch zwei Pumplaser wie bei Fig. 1c vorhanden sein, deren Pumplicht jeweils in eines der Enden des Faserstücks eingekoppelt wird.

Nachteilhaft an diesem optischen Verstärker ist, daß das von dem Halbleiterlaser erzeugte Pumplicht an allen Stellen in seinem Ausbreitungsweg, an denen Brechungsindexsprünge auftreten (z.B. im Bereich des optischen Kopplers oder am Übergang zwischen der Lichtleitfaser und dem Erbium-dotierten Faserstück), in den Halbleiterlaser zurückreflektiert wird. Dadurch verschlechtert sich der Wirkungsgrad des Halbleiterlasers; das zurückreflektierte Licht kann Schwankungen in der Amplitude des von dem Halbleiterlaser emittierten Pumplichts verursachen, weil die laseraktive Schicht in dem Halbleiterlaser zusammen mit einem Teil der Übertragungsstrecke (d.h. bis zu der Stelle mit dem Brechungsindexsprung) als Laserresonator wirkt. Dadurch ändert sich einerseits die Emissionsfrequenz des Halbleiterlasers, andererseits wird die Amplitude des Pumplichts Oszillationen unterworfen. Besonders, wenn die Oszillationen im niederfrequenten Bereich, z.B. im Kilohertz-Bereich, auftreten, wird die verstärkende Wirkung des Faserstücks zeitweise aufgehoben: Die optische Übertragung ist unter Umständen unterbrochen.

Im Falle, daß zwei Pumplaser (jeweils Halbleiterlaser) vorhanden sind, besteht das geschilderte Problem für jeden der beiden Pumplaser. Weiterhin besteht in diesem Falle das Problem, daß von jedem Pumplaser Restpumplicht in den jeweils anderen, gegenüberliegenden Pumplaser gelangt, was optische Instabilitäten verursacht, die dann wieder zu den oben geschilderten Problemen der Verstärkungsschwankungen führen. Daher werden heute im allgemeinen optische Isolatoren vor den Pumplasern eingesetzt.

Es ist die Aufgabe der Erfindung, einen optischen Verstärker mit einem Pumplaser oder mit zwei Pumplasern zu schaffen, der eine störungsfreie Verstärkung der Lichtsignale gewährleistet.

Die Aufgabe wird wie in Patentanspruch 1 angegeben gelöst.

Ein Vorteil der Erfindung ist darin zu sehen, daß sie den kostenaufwendigen Einbau optischer Isolatoren zwischen dem optischen Koppler und dem Halbleiterlaser unmittelbar vor diesem zur Vermeidung der Rückreflexion des Pumplichts in den Halbleiterlaser überflüssig macht.

Die Frequenz, mit der der Betriebsstrom moduliert ist, liegt oberhalb der reziproken Lebensdauer desjenigen angeregten Energieniveaus der laseraktiven Substanz, z.B. Erbium, das die Verstärkung der zu übertragenden Lichtsignale bewirkt. Auf diese Weise werden die Schwankungen in der Amplitude des Pumplichts von der laseraktiven Substanz nicht "wahrgenommen", d.h., das Faserstück wirkt für den Wechselanteil des Pumplichtsignale wie ein Tiefpaß.

Vorteilhafte Weiterbildungen sind den Unteransprüchen zu entnehmen.

Im folgenden wird die Erfindung von lediglich einen Ausführungsweg darstellenden Zeichnungen näher erläutert.

Es zeigen:
- Fig. 1: einen erfindungsgemäßen optischen Verstärker mit einem einzigen Pumplaser, und
- Fig. 2: einen erfindungsgemäßen Verstärker mit zwei Pumplasern.

Bei Fig. 1 ist in eine Lichtwellenleiter-Übertragungsstrecke 1 ein optischer Verstärker eingefügt. Er hat ein Faserstück 2, das mit einer laseraktiven Substanz, z.B. Erbium, dotiert ist. Auf der Lichtwellenleiter-Übertragungsstrecke 1 werden Lichtsignale übertragen und in dem Faserstück 2 verstärkt. Die Lichtsignale haben beispielsweise eine Wellenlänge von λ = 1530 - 1570 nm. Das Faserstück 2 ist an einem ersten Ende 21 über einen optischen Koppler 3 mit einem Halbleiterlaser 4 verbunden. Der Halbleiterlaser 4 ist beispielsweise ein InGaAsP/InP-, ein InGaAs/AlGaAs- oder ein GaAlAs/GaAs-Laser, der bei einer Wellenlänge aus dem Wellenlängenbereich von λ = 750 - 870 nm λ = 960 - 1000 nm oder λ = 1460 - 1500 nm emittiert. Über einen elektrischen Anschluß 41 ist er mit einer Gleichstromquelle 5 verbunden. Soweit bisher beschrieben, stimmt der optische Verstärker nach Fig. 1 mit den bekannten überein.

Erfindungsgemäß soll der Betriebsstrom des Lasers kein Gleichstrom sondern ein modulierter Strom sein. Hierzu hat der Halbleiterlaser 4 beim Ausführungsbeispiel der Fig. 1 einen elektrischen Anschluß 42, über den er mit einer Wechselstromquelle 6 verbunden ist. Die Wechselstromquelle 6 erzeugt beispielsweise entweder einen sinusförmigen oder einen rechteckförmigen Wechselstrom.

Die Wechselstromquelle 6 erzeugt einen Wechselstrom, der zusammem mit dem Gleichstrom der Gleichstromquelle den Betriebsstrom des Halbleiterlasers 4 (Pumplaser) bildet. In anderen Worten: Der Betriebsstrom ist ein Gleichstrom, dem ein Wechselstrom überlagert ist, oder: Der Betriebsstrom ist ein (periodisch) modulierter Gleichstrom.

Statt einer Anordnung aus Gleichstromquelle 5 und Wechselstromquelle 6 kann auch eine modulierbare Gleichstromquelle als Betriebsstrom-Quelle vorhanden sein. Es muß nur irgendwie für eine Modulation des Betriebsstroms gesorgt sein.

Aufgrund des Wechselstroms, d.h. des modulierten Betriebsstroms, emittiert der Halbleiterlaser 4 mehrmodiges Pumplicht; beispielsweise wird das bei Gleichstrom nur wenige Moden aufweisende Licht eines Halbleiterlasers, der bei λ = 1480 nm emittiert, durch den Wechselstromanteil in 20 - 30 Moden aufgespalten, die einen Modenabstand von 80 GHz haben.

Die Frequenz des Wechselstroms, d.h. die Modulationsfrequenz des Betriebsstroms, liegt oberhalb der reziproken Lebensdauer des angeregten, laseraktiven Energieniveaus des Erbiums in dem Faserstück 2. Da die Lebensdauer des Energieniveaus im Millisekundenbereich liegt, ist für den Wechselstrom eine Frequenz im unteren Megahertz-Bereich vorzusehen. Dann findet keine Modulation der zu übertragenden und zu verstärkenden Lichtsignale mit der Frequenz des Pumplichts statt.

Wie eingangs erwähnt, gibt es auch faseroptische Verstärker mit zwei Pumplasern auf je einer Seite des verstärkenden Faserstücks. Auch bei solchen Verstärkern kann das Problem der Rückreflexionen von Pumplicht in den Pumplaser wie oben erläutert gelöst werden, indem der oder die Pumplaser mit einem Betriebsstrom arbeiten, der ein modulierter Gleichstrom ist.

Fig. 2 zeigt ein Ausführungsbeispiel einer solchen Lösung. Im linken Teil der Fig. entspricht es genau dem der Fig. 1, so daß dieser Teil nicht nochmals erläutert zu werden braucht. Das Faserstück 2 ist an einem zweiten Ende 22 über einen optischen Koppler 7 mit einem zweiten Halbleiterlaser 8 verbunden. Dieser hat zwei elektrische Anschlüsse 81 und 82, über die er mit der Gleichstromquelle 5 bzw. der Wechselstromquelle 6 verbunden ist.

Anstelle der einzigen Wechselstromquelle 6 kann für jeden Halbleiterlaser 4, 8 je eine eigene Wechselstromquelle vorgesehen sein. Dasselbe gilt für die Gleichstromquelle 5.

Durch eine Betriebsstromquelle der anhand von Fig. 2 genannten Art oder durch andere Mittel, wie sie oben für den Fall eines einzigen Pumplasers erläutert sind, ist also auch im Falle von zwei Pumplasern dafür gesorgt, daß der Betriebsstrom moduliert ist.

Trotzdem ist eine störende gegenseitige Beeinflussung der Pumplaser nicht auszuschließen. Daher werden heute optische Isolatoren vor den Pumplasern eingesetzt. Erfindungsgemäß lassen sich die Isolatoren vermeiden, wenn die zwei Pumplaser abwechselnd aus- und eingeschaltet werden, so daß immer nur einer aktiv und der andere inaktiv ist. Für jeden der beiden Pumplaser ist dies eine Modulation seines Betriebsstroms und es wird dadurch eine wechselseitige Störung der Halbleiterlaser 4, 8 ausgeschlossen. Die Multimodigkeit der Laser ist wegen des Schaltens automatisch gewährleistet, wenn die Schaltfrequenz hinreichend hoch gewählt ist. Ist sie im Hinblick auf die Multimodigkeit des Pumplasers hoch genug, so ist sie praktisch auch höher als die reziproke Lebensdauer des angeregten Energieniveaus der in dem Faserstück 2 enthaltenen laseraktiven Substanz, was wie oben erläutert in jedem Falle erforderlich ist.

Obwohl bei zwei abwechselnd eingeschalteten Pumplasern die mittlere Pumpleistung im Faserstück 2 nur so groß wie die von einem einzigen dauernd eingeschalteten Pumplaser aufgebrachte Pumpleistung ist, ergeben sich folgende Vorteile: Durch das bidirektionale Pumpen wird gleichzeitig sowohl eine niedrige Rauschzahl als auch eine hohe Ausgangsleistung erreicht. Außerdem wird jeder Laser nur zur Hälfte belastet, was sich positiv auf die Zuverlässigkeit auswirkt.

Zum Versorgen der beiden Pumplaser mit abwechselnd ein- und ausgeschaltetem Betriebsstrom dient beispielsweise ein HF-Generator mit zwei zueinander invertierten Ausgängen, von denen jeweils einer Strom führt, während der andere keinen Strom führt.

Für das Aus- und Einschalten der Pumplaser spielt es keine Rolle, ob der Betriebsstrom eines Pumplasers während dessen Ausschaltphase völlig ausgeschaltet oder nur unter den Pumplaser-Schwellenstrom abgesenkt wird.

Das abwechselnde Ein- und Ausschalten der beiden Pumplaser kann auch durch eine Vorrichtung erfolgen, die einen Wechselstrom, der einen rechteckförmigen zeitlichen Verlauf hat, über einen Schalter abwechselnd dem einen und dem anderen Pumplaser zuführt.

Der Betriebsstrom eines Pumplasers kann - gleichgültig, wie er erzeugt wird - ein rechteckförmig ein- und ausgeschalteter Gleichstrom sein. Es kann aber auch ein rechteckförmig ein- und ausgeschalteter Gleichstrom sein, dem dauernd oder nur während der Einschaltphase des Pumplasers ein Wechselstrom überlagert ist, so daß während der Einschaltphase selbst ein modulierter Gleichstrom als Betriebsstrom durch den Pumplaser fließt. Dies ist insbesondere dann erforderlich, wenn die Schaltfrequenz des wechselweisen Einschaltens der beiden Laser nicht hoch genug ist, um jeden der Pumplaser während dessen Einschaltphase multimodig zu machen. Dann sorgt die Modulation des Gleichstroms für die Multimodigkeit während der Einschaltphase.

## Patentansprüche

1. Optischer Verstärker mit einem Lichtsignale verstärkenden, eine laseraktive Substanz enthaltenden Faserstück (2), das an mindestens einen als Pumplichtquelle dienenden Halbleiterlaser (4) angekoppelt ist, der durch einen Betriebsstrom aktivierbar ist,
**dadurch gekennzeichnet**, daß eine Betriebsstrom-Quelle (5, 6) vorhanden ist, die für den oder die Pumplaser (4, 8) einen modulierten Betriebsstrom erzeugt, wobei die Frequenz, mit der der Betriebsstrom moduliert ist, oberhalb der reziproken Lebensdauer eines bei seinem Zerfall die Lichtsignale verstärkenden Energieniveaus der laseraktiven Substanz liegt.

2. Optischer Verstärker nach Anspruch 1, dadurch gekennzeichnet, daß die Betriebsstrom-Quelle eine Gleichstromquelle (5) und eine Wechselstromquelle (6) enthält, deren Ausgangsströme zusammen den Betriebsstrom bilden.

3. Optischer Verstärker nach Anspruch 1 mit zwei jeweils an ein Ende des Faserstücks (2) angekoppelten Halbleiterlasern (4, 8) als Pumplichtquellen, dadurch gekennzeichnet, daß die Betriebsstrom-Quelle die beiden Halbleiterlaser derart mit Betriebsstrom versorgt, daß die beiden Halbleiterlaser abwechselnd ein- und ausgeschaltet werden.

4. Optischer Verstärker nach Anspruch 3, dadurch gekennzeichnet, daß der Betriebsstrom für jeden der beiden abwechselnd eingeschalteten Halbleiterlaser (4, 8) ein mit der genannten Frequenz ein- und ausgeschalteter und dadurch modulierter Gleichstrom ist.

5. Optischer Verstärker nach Anspruch 3, dadurch gekennzeichnet, daß der Betriebsstrom für jeden der beiden abwechselnd eingeschalteten Halbleiterlaser (4, 8) ein ein- und ausgeschalteter Gleichstrom ist, der mit der genannten Frequenz moduliert ist.

## Claims

1. An optical amplifier with a length of fiber (2) that contains a laser-active substance for amplifying light signals, which is coupled to at least one semiconductor laser (4) serving as a pump light source, which is activated by an operating current, characterized in that an operating current source (5, 6) is provided, and produces a modulated operating current for the pump laser or lasers (4, 8), where the modulation frequency of the operating current is above the reciprocal lifetime of the energy level of the laser-active substance, which amplifies the light signals when it decays.

2. An optical amplifier according to claim 1, characterized in that the operating current source contains a DC source (5) and an AC source (6), whose output currents together form the operating current.

3. An optical amplifier according to claim 1, with two semiconductor lasers (4, 8), each connected as a pump light source to one end of the length of fiber (2), characterized in that the operating current source supplies current to the two semiconductor lasers in such a way, that the two semiconductor lasers are alternately switched on and off.

4. An optical amplifier according to claim 3, characterized in that the operating current for each of the two alternately switched-on semiconductor lasers (4, 8), is a DC current that is switched on and off at the named frequency, and is thereby modulated.

5. An optical amplifier according to claim 3, characterized in that the operating current for each of the two alternately switched-on semiconductor lasers (4, 8) is a DC current that is switched on and off, which is modulated at the named frequency.

## Revendications

1. Amplificateur optique comportant un élément de fibre (2) qui amplifie les signaux lumineux, contient une substance à activité laser et qui est couplé à au moins un laser à semi-conducteur (4) qui sert de source de lumière de pompage et peut être activé par un courant d'exploitation,
caractérisé par le fait qu'il y a une source de courant d'exploitation (5, 6) qui produit un courant d'exploitation modulé pour le ou les lasers de pompage (4, 8), la fréquence à laquelle le courant d'exploitation est modulé se situant au-dessus de l'inverse de la durée de vie d'un niveau d'énergie, amplifiant les signaux lumineux lors de sa décomposition, de la substance à activité laser.

2. Amplificateur optique selon la revendication 1, caractérisé par le fait que la source de courant d'exploitation contient une source de courant continu (5) et une source de courant alternatif (6) dont les courants de sortie forment ensemble le courant d'exploitation.

3. Amplificateur optique selon la revendication 1, comportant, en tant que sources de lumière de pompage, deux lasers à semiconducteur (4, 8), chacun couplé à une extrémité de l'élément de fibre (2), caractérisé par le fait que la source de courant d'exploitation alimente les deux lasers à semi-conducteur en courant d'exploitation de façon telle que les deux lasers à semi-conducteur sont alternativement mis en circuit et hors circuit.

4. Amplificateur optique selon la revendication 3, caractérisé par le fait que le courant d'exploitation pour chacun des deux lasers à semi-conducteur (4, 8) alternativement mis en circuit est un courant continu mis en circuit et hors circuit à la fréquence mentionnée, et de ce fait modulé.

5. Amplificateur optique selon la revendication 3, caractérisé par le fait que le courant d'exploitation pour chacun des deux lasers à semi-conducteur (4, 8) alternativement mis en circuit est un courant continu mis en circuit et hors circuit qui est modulé à la fréquence mentionnée.
